Europäisches Patentamt

European Patent Office

Office européen des brevets

(19)

(11) **EP 1 499 105 A2**

(12) **EUROPEAN PATENT APPLICATION**

(43) Date of publication:
19.01.2005 Bulletin 2005/03

(51) Int Cl.[7]: **H04N 1/387**

(21) Application number: **04016268.7**

(22) Date of filing: **09.07.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **15.07.2003 JP 2003197071**

(71) Applicant: **Konica Minolta Medical & Graphic Inc.**
**Tokyo 163-0512 (JP)**

(72) Inventor: **Kido, Atsushi**
**Hachioji-shi Tokyo, 192.8505 (JP)**

(74) Representative: **Henkel, Feiler & Hänzel**
**Möhlstrasse 37**
**81675 München (DE)**

(54) **Image data output system, image data control device, image data extracting method, image data control program, and program storage medium**

(57)     An image output system for extracting and outputting a proper image area when outputs image data as a color sample, comprising an image data control device and an image data output apparatus, the image data control device comprising an image data receiving section receives an layout image data from an external apparatus, a storing section stores the received layout image data, an image data analyzing section analyzes the size of an image area of the stored layout image data, a recording medium specifying section specifies the size of a recording medium, a comparing section compares the size of the analyzed layout image area with the size of an output image area corresponding to the specified recording medium, an extracting section extracts an image data according to the result of comparison, and the image output apparatus that output an image data according to the sent and extracted image data to the recording medium.

FIG. 3

EP 1 499 105 A2

**Description**

**BACKGROUND OF THE INVENRION**

This invention relates to an image output system, a control device, an image extracting method, a program to execute the method, and a storage medium that stores the program, and particularly to a means that outputs, as a color sample for correction, a large image that overflows an image output area of an image output device.

Recently, desktop publishing (DTP) and the like have become popular and widespread. A method of editing and laying out images entered from a scanner and by software on a personal computer has been generalized and even a full digital image edition has also ceased to be novel.

For higher efficiency, such processes have employed an image setter output that outputs page-arranged image data directly to films, a CTP (Computer to Plate) output that records images directly on plates, and a CTC (Computer to Cylinder) output that records images directly on plates wound on a printer cylinder.

In the above cases, you must output images to films or plates and correct printing by these or other correction tools singly to confirm corrections. This wastes films, plates, and jobs.

To improve this, a direct color image output system called DDCP (Direct Digital Color Proof) has been demanded in computer-aided full-digital image creation and edition.

The purpose of this DDCP system is to create a digital color proof (DCP) for confirmation of images, color tones, text characters, etc. before recording page-arranged image data on a make-up plate by an image setter, directly creating a plate by the CTP for final printing, and directly printing images on a plate wound on a cylinder.

Before creating a DCP, the DCP creating system outputs small images of single image pages (image data before page arrangement) to a color laser printer for confirmation of images, color tones, text characters, etc. of the resulting color comprehensive image layout.

In other words, it is popular in page make-up processes to create a color comprehensive layout and a DCP for confirmation of images, color tones, text characters, etc. before final printing.

However, as color laser printers have improved their performance strikingly to offer inexpensive high-quality color printouts very fast, the world has been increasing a demand to use such color laser printers for creation of color comprehensive image layouts.

Such color laser printers can be represented by an electrophotographic color laser printer disclosed by Japanese Patent Publication H05-48857 (Paragraphs 0011 to 0070 and FIG. 1 to FIG. 13) and a complex machine having scanner, copier, and facsimile functions.

From the point of view of process quality assurance, it is assumed to be preferable that the image data to be used for color correction is the same as the image data to be output to the CTP or the like for final printing. This kind of image data is digital data (file) obtained by analyzing and processing the page-arranged image data (image data described by PDF or PostScript which is a general page description language) by the raster image processor (RIP) connected to the CTP (by raster- or outline-processing vector data such as character font information). The data is shared by the CTP and the DCP to shorten the RIP processing time and eliminate output differences due to RIP differences.

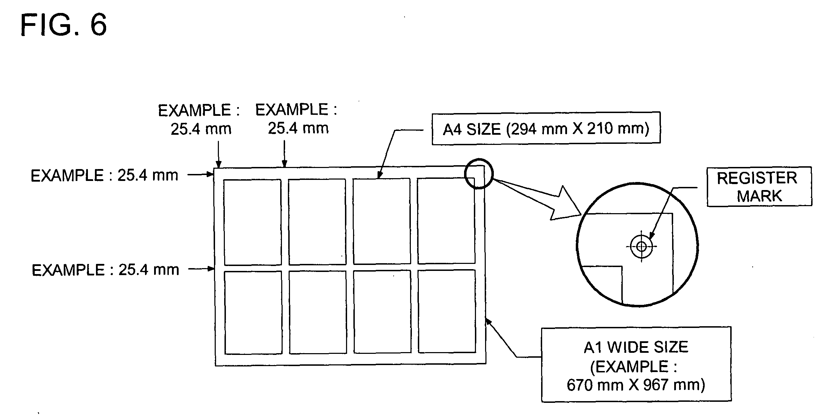

However, as shown in FIG. 6, image data output by the CTP is image data of the standard size or greater (e.g. A1 wide size of 670 mm long $\times$ 967 mm wide) which lays out some image data pages (e.g. 8 pages) of a small size (e.g. A4 size of 297 mm long $\times$ 210 mm wide) with margins (a register mark area and a punched area for the CTP plate). Contrarily, almost all current color laser printers output to at most A3-wide size sheets (457 mm long $\times$ 311 mm wide) and they are hard to properly output image data of greater than the standard size. In such cases, for reference's sake, part of the image data output by the CTP is output by the output sizes of the color laser printer.

Further, when image data of two A4-size pages (297 mm long $\times$ 210 mm wide) is output using a recording medium of the A3-size (297 mm long $\times$ 420 mm wide) or when image data of the A4-size (297 mm long $\times$ 210 mm wide) is output using a recording medium of the A4-size (297 mm long $\times$ 210 mm wide), the image data by the CTP cannot be output properly because of margins.

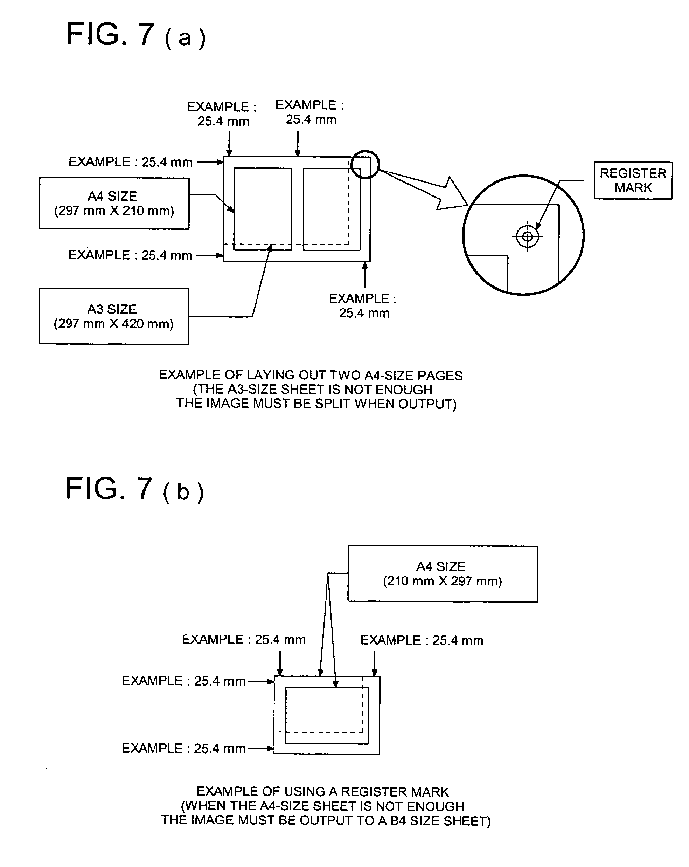

For example, as shown in FIG. 7(a), when outputting image data of two A4-size pages (297 mm long $\times$ 210 mm wide) using a recording medium of the A3-size (297 mm long $\times$ 420 mm wide), part of the image area is missing (not output) as the image data output by the CTP contains a margin of, for example, 25.4 mm wide (for a register mark area and a punched area for the CTP plate). Similarly, when outputting image data of the A4-size size (297 mm long $\times$ 210 mm wide) using a recording medium of the A4-size (297 mm long $\times$ 210 mm wide), part of the image area is missing (not output) as the image data output by the CTP contains a margin of, for example, 25.4 mm wide (for a register mark area and a punched area for the CTP plate).

This is a great problem when a color laser printer is used as a means to create a DCP. To prevent this, a split output is used for the former and a storage medium of a size greater by one size (B4 size) is used for the latter. These countermeasures cannot be free from increasing post-printing labors, hours and printing costs.

To solve such problems, it is assumed to be effective to output image data without a register mark area that is not always required to confirm the printout result. Japanese Non-examined Patent Publication H05-153363 (Paragraphs 0010 to 0026 and FIG. 1 to FIG. 5) discloses an image-information processing device or the like as the basic concept.

However, as the above image-information processing device is an art for an image scanner which is assumed to read image data of indefinite forms, a mechanism for detecting required areas is too complicated in the proofing field and may increase the printing costs. As already explained, the proofing field handles data of infinite formats. Therefore, a simple and inexpensive image-information processing method has been expected.

## SUMMARY OF THE INVENTION

This invention has been made to solve the above problems. An object of this invention is to provide an image output system that extracts and outputs a proper area when outputting page-arranged image data that overflows a recording medium as a color sample for calibration, a control device, an image extracting method, a program to execute the method, and a storage medium that stores the program.

To solve the above problems, this invention provides an image output system comprising a control device to receive image data that lays out one or more smaller image pages and to send image data extracted from a specific area that encloses said image pages and an image output device that outputs images according to said sent and extracted image data; wherein said control device further comprises

an image data storing section that stores said received image data, an image data analyzing section that analyzes the size of an image of said stored image data, an image area memorizing section that memorizes the size of image area that is output by the image output device according to the size of each storing medium, a medium specifying section that specifies the size of a recording medium that is output by said image output device, a comparing and determining section that compares the size of said analyzed image with that of an image area corresponding to said specified recording medium that is stored in said image area memorizing section and determines an extraction area that encloses an image of said stored image data, and an extracting section that extracts a relevant image data from said stored image data into said extraction area according to said determined extraction area and sends the image data as image data that extracts said specific area to said image output device.

A control device for an image output device that outputs images according to image data receives image data that lays out one or more smaller image pages from an external device and sends image data extracted from a specific area that encloses said image pages. Said control device further comprises an image output device that outputs images according to said sent and extracted image data; wherein said control device further comprises an image data storing section that stores said received image data,

an image data analyzing section that analyzes the size of an image of said stored image data, an image area memorizing section that memorizes the size of image area that is output by the image output device according to the size of each storing medium, a medium specifying section that specifies the size of a recording medium that is output by said image output device, a comparing and determining section that compares the size of said analyzed image with that of an image area corresponding to said specified recording medium that is stored in said image area memorizing section and determines an extraction area that encloses an image of said stored image data, and an extracting section that extracts a relevant image data from said stored image data into said extraction area according to said determined extraction area and sends the image data as image data that extracts said specific area to said image output device.

An image data extracting method comprising steps of receiving image data that lays out one or more smaller image pages from an external device, creating image data extracted from a specific area that encloses said image pages, and outputting images according to the extracted image data; wherein said method further comprises a step of storing said received image data, a step of analyzing the size of an image of said stored image data, a step of memorizing the size of image area that is output by the image output device according to the size of each storing medium a step of specifying the size of a recording medium that is output by said image output device, a step of comparing the size of said analyzed image with that of an image area corresponding to said specified recording medium that is stored in said image area memorizing section and determining an extraction area that encloses an image of said stored image data, and a step of extracting a relevant image data from said stored image data into said extraction area according to said determined extraction area and creating image data extracted from said specific area.

## BRIEF DESCRIPTION OF THE DRAWINGS

FIG. 1 shows a schematic diagram of the whole image output system that is an embodiment of this invention.
FIG. 2 shows a flow chart of printing operations in the image output system of FIG. 1.
FIG. 3 shows a detailed functional block diagram of the controller of FIG. 1.
FIG. 4 shows a flow chart of image data trimming operations made by the controller of FIG. 3.
FIG. 5 is a drawing to explain how the coordinates of a trimming origin are calculated by the trimming section of the controller of FIG. 3.
FIG. 6 shows a configuration of image data to be output by the CTP.

FIG. 7 is a drawing to explain image data output processing of a conventional image-processing device.

## DETAILED DESCRIPTION OF THE PREFERRED EMBODIMENT

Below will be described an image output system, a control device, an image extracting method, a program to execute the method, and a storage medium that stores the program in accordance with this invention in further detail by way of embodiments with reference to the accompanying drawings.

[Image output system]

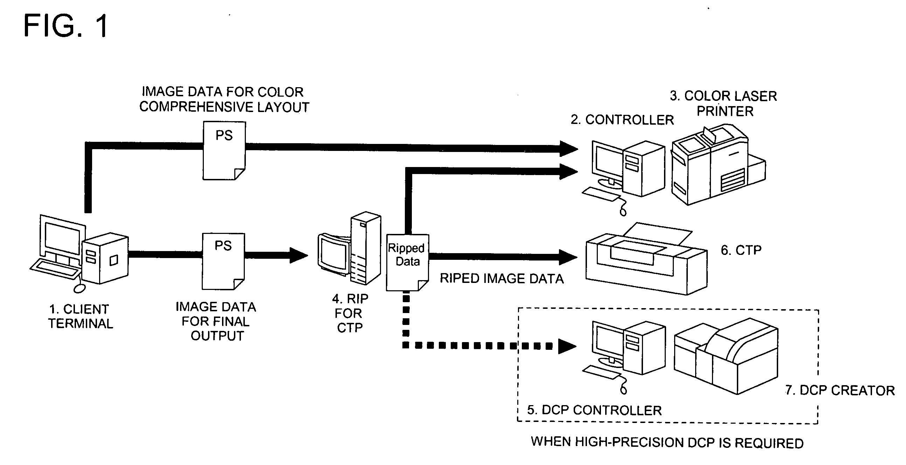

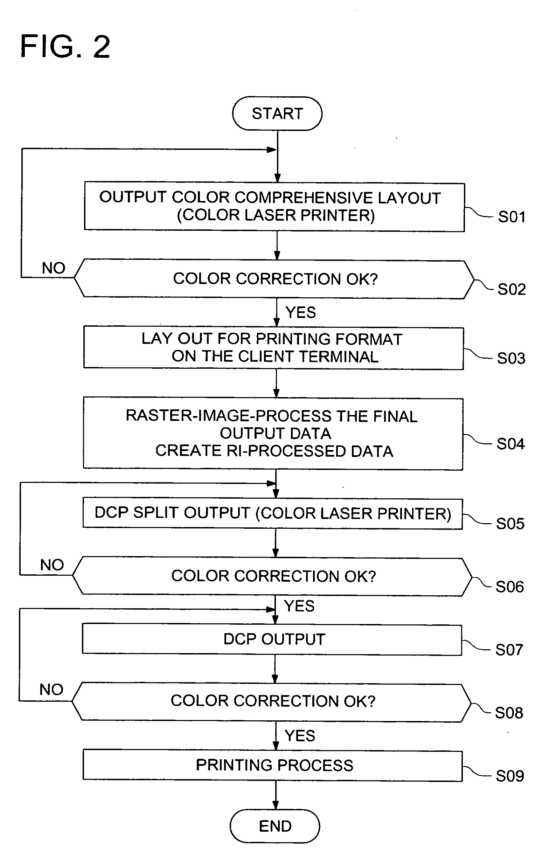

The configuration and outline operations of the image output system of this embodiment will be explained with reference to FIG. 1 along a flow of a flowchart in FIG. 2

<System configuration>

As shown in FIG. 1, the image output system consists of a client terminal 1 that performs image edition of image data and page arrangement (imposition or layout for printing format), a controller 2 that receives image data for color comprehensive layout (image data of a single page before page arrangement) that is written, for example, by PostScript from the client terminal 1 and sends the image data to a color laser printer 3 to be explained later, a color laser printer 3 of the charged duplication type that receives the image data for color comprehensive layout from the controller 2 and outputs an image based on the image data or receives image data for final output (image arranging pages of the image data for color comprehensive layout) from the RIP 4 for CTP (to be explained later) and outputs an image based on the image data, an RIP 4 for CTP that receives image data for final output that is written, for example, by PostScript from the client terminal 1, performs RIP processing (converting the image data into bit map data according to the output resolution of the CTP 6 and the DCP creator), and sends the image data to the controller, the CTP 6, and the DCP controller 5 when a higher DCP is required, a DCP creator 7 that receives image data for final output from the RIP 4 for CTP via the DCP controller 5 and outputs images of the final image data as DCP, and a CTP 6 that receives the final output image data from the RIP 4 for CTP and outputs images of the data. These devices are interconnected by means of a network.

Here, the client terminal 1, the controller 2, the RIP 4 for CTP, and the DCP controller 5 respectively work as a computer terminal. Each computer terminal is equipped with a keyboard, a monitor, and so on. Some required operation programs are preinstalled in the computer. The client terminal 1 is equipped with an image input means such as an image scanner to get image data.

<Summary of operation>

In the flowchart shown in FIG. 2, the client terminal 1 edits and sends image data to the controller 2. When receiving the image data, the controller 2 controls the color laser printer 3 to output a color comprehensive layout (S01). The "color comprehensive layout" means a colored finishing sample that is almost the final printout containing dummy layouts of pictures and illustrations. This sample can be used to check whether the image design satisfies the client's plan and intention of edition and to get an approval from the client. The "color comprehensive layout" is a small-scale printout of single pages and will be approved after proofing and the like.

When the "color comprehensive layout" is found acceptable by the operator (Yes at S02), the client terminal 1 performs page arrangement on the color comprehensive layout. (SO3 "Page arrangement" (also termed "imposition" or "layout for printing format") means to lay out images such as pictures and illustrations by 16, 8, or 4 pages according to the size of the print sheet so that they may be arranged in the order of folios (page numbers respectively given to each page end) when a plating film is printed into a final signature.

When receiving page-arranged image data for final output from the client terminal 1, the RIP 4 for CTP performs raster image processing (RIP) on the image data, that is, converts the image data into bit map data according to the output resolution of the DCP creator 7 or CTP 6 (SO4). The RIP 4 for CTP sends this RIPed image data to the controller 2. Upon receiving this image data, the controller 2 controls the color laser printer 3 to output images of the final image data (S05). The page-arranged image printout is used as a DCP (digital color proof). When a high-precision DCP is required, the RIPed image data is sent to the DCP controller 7. When receiving it, the DCP controller 7 controls the DCP creator 8 to output images of the final output image data. The page-arranged image printout is used as a DCP.

Then the DCP is color-checked. After the DCP is found acceptable by the operator (Yes at S06), the RIP for CTP sends the RIPed image data (the same image data that was used to output the DCP) to the CTP. The CTP directly records the image on the print plate (S07). Then, printing is made by the print plate and the page-arranged printout is color-corrected. When the printout is found acceptable by the operator (Yes at SO8), the final printout is made by a printer. (S09).

[Controller]

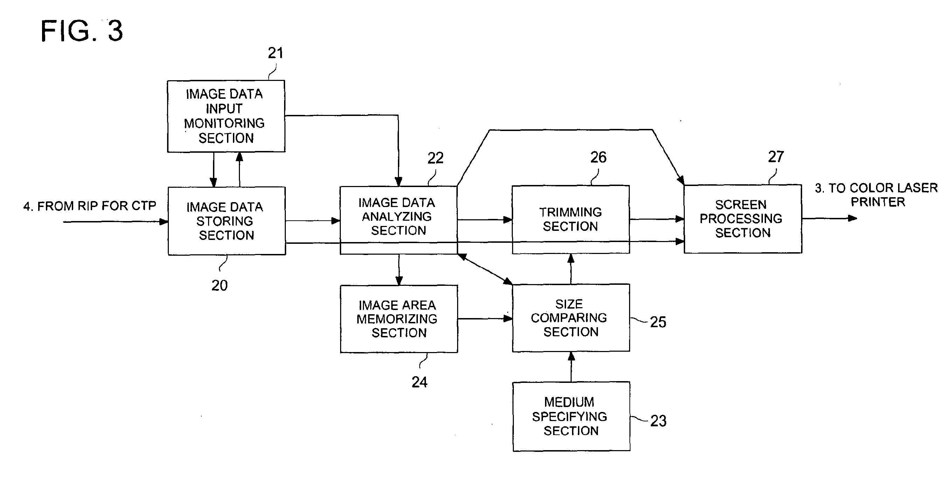

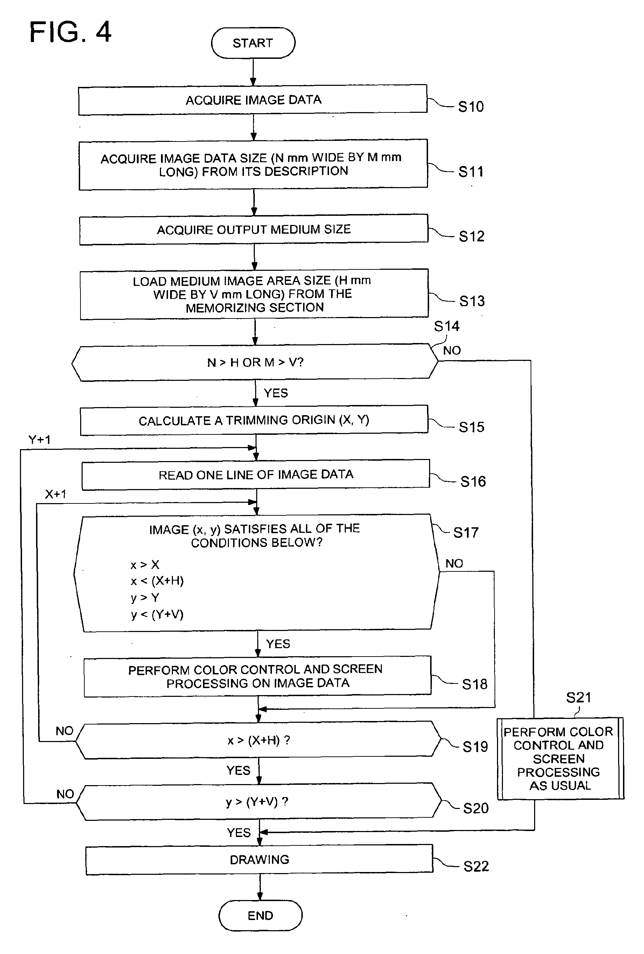

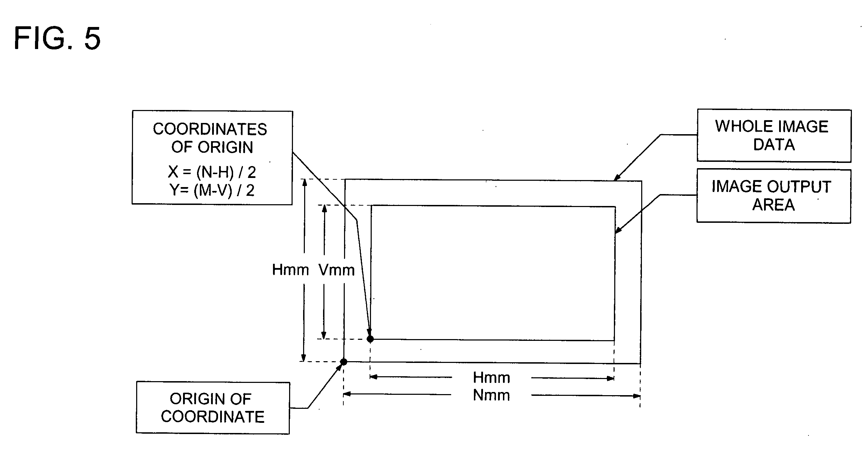

The configuration and outline operations of the controller 2 constituting the image output system of this embodiment will be explained with reference to FIG. 3 and FIG. 5 along a flow of a flowchart in FIG. 4. The description below mainly explains output processing of page-arranged image data by the controller 2 which is characterized by this invention.

<System configuration>

As shown in FIG. 3, the controller 2 consists of an image data storing section 20 that receives and stores the entered image data, an image data input monitoring section 21 that monitors how the image data is stored in the image data storing section 20, an image data analyzing section 22 that receives a notification from the image data input monitoring section 21 and analyzes the image size of the image data stored in the image data storing section 20, a medium specifying section 23 that specifies the size of recording medium to which the image data is output from the image data storing section 20, an image area memorizing section 24 that memorizes sizes of image output areas of the color laser printer 3 according to the sizes of the memory media in advance, a size comparing section 25 that determines a trim area (to be cut out) of an image whose size is analyzed by the image data analyzing section 22 before the image is output to a recording medium of a size specified by the medium specifying section 23 according to the size of an image output area of a relevant recording medium (recording medium of a size specified by the medium specifying section 23) that is memorized in the image area memorizing section 24, a trimming section 26 that trims image data (image of the image size analyzed by the image data analyzing section 22) stored in the image data storing section 20 according to the area determined by the size comparing section 25, and a screen processing section 27 that performs color correction and screen processing (that converts a gradated manuscript such as pictures and illustrations into a printout manuscript having sets of fine dots (mesh, dots, and halftone dots)) on the trimmed image data and sends the processed image data to the color laser printer 3. The size comparing section 25 is equivalent to the comparing and determining section of this invention. The trimming section 26 and the screen processing section 27 are equivalent to the extracting section of this invention.

<Details of operation>

In the flowchart shown in FIG. 4, when the image data for final output (which is RIPed and page-arranged) from the RIP 4 for CTP is stored in the image data storing section 20 (at S10; image data storing step), the input monitoring section 21 gives a notice to the image data analyzing section 22. Upon receiving it, the image data analyzing section 22 analyzes the image size of the image data that is stored in the image data storing section 20 (an image data analyzing step). This section gets the image size (N mm long by M mm wide), coordinates, and page arrangement information (Number of pages in row and number of pages in column in the relevant image data) that is described in the relevant image data. (S11). Here, when the relevant image data is to be output by the CTP, the image data analyzing section 22 gets, as the image size of the relevant image data, the total size of the arranged image data areas excluding the marginal areas (the register mark area and the punch area of the CTP plate). Namely, Such a case assumes that the sizes of the marginal area and the page-arranged areas are described in the image data.

The monitor unit of the controller 2 displays the above-described page-arrangement information by means of GUI (graphical user interface)(a displaying step). With reference to the page-arrangement information displayed on the monitor unit, the operator specifies a proper size of a recording medium to which image data is output from the image data storing section 20 on the medium specifying section 23. (In concrete terms, the operator specifies a size of a recording medium to which all areas that enclose the image of the page-arranged image data is output.) With this the size of an image data output medium is obtained. (a medium specifying step; S12)

The size comparing section 25 reads an image output area corresponding to a recording medium size specified by the medium specifying section 23 from image output areas of the color laser printer 3 corresponding to recording medium sizes that are stored in the image area memorizing section 24 in advance (an image area storing step) (S13). Then the size comparing section 25 determines a trimmed area of the image of the image size analyzed by the image data analyzing section 22 according to the size of the image data analyzing section 22 (V mm long by H mm wide) when the image is output to a recording medium of a size specified by the medium specifying section 23 (a comparing and determining step).

In concrete terms, the size comparing section 25 compares the image size (N mm long by M mm wide) of the image data stored in the image data storing section 20 with the image output area (V mm long by H mm wide) corresponding to the recording medium specified by the medium specifying section 23 and judges whether the image size of the image data exceeds the size of the image output area (in length, width, or both). (S14) When the image size of the image data does not exceed the size of the image output area (No at S14), the trimming section 26 reads image data line by line from the image data storing section 20 and outputs the image data to the screen processing section 27 without carrying out trimming (to be explained later). The screen processing section 27 receives each line of the image data from the trimming section 26, performs color adjustment and screen processing on each line of the image data and sends it to the color laser printer 3. If the length or width of the image data exceeds that of the image output area (Yes at S14), the trimming section 26 calculates the coordinates of a trimming origin (X, Y) (see FIG. 5) by Equation 1. As already explained, this assumes that the positional coordinates of the image of the image data are described in the image data. The image data analyzing section 22 analyzes the positional coordinates. Further it is assumed that the size comparing section 25 selects and reads the relevant positional coordinates of the image output area corresponding to the recording medium specified by the medium specifying section 23 from those stored together with the image output areas of the color laser printer 3 corresponding to sizes of recording media in the image area memorizing section 24. For reference, this embodiment places the origin of the coordinates at the lower left corner of the image of the image data. The coordinates of a position are expressed in millimeters.

[Equation 1]

$$X = (N - H)/2 \quad (X = 0 \text{ if } x < 0)$$

$$Y = (M - V)/2 \quad (Y = 0 \text{ if } Y < 0)$$

When the size comparing section calculates the coordinates of a trimming origin as explained above, the trimming section 26 reads the image data line by line from the image data storing section (S16) and checks whether the coordinates (x, y) of the first pixel of each line satisfy all of the conditions below (S17).

[Equation 2]

$$x > X$$

$$x < (X + H)$$

$$y > Y$$

$$y < (Y + V)$$

If any of the above conditions is not satisfied (No at S17), the screen processing section 27 goes to step S19 without performing any color adjustment and screen processing on data corresponding to the pixel. When all of the above conditions are satisfied (Yes at S17), the screen processing section 27 performs a color adjustment and screen processing on data corresponding to the pixel (S18). Further, the trimming section 26 checks whether the coordinate (x) of the relevant pixel reaches the image size ((x + H) in width) of the image data (S19). When the coordinate (x) does not reach the image size (x + H in width) (No at S19), the trimming section 26 returns to S17 and performs the above on the next pixel (x = x + 1). When the coordinate (x) reaches the image size ((x + H) in width) (Yes at S19), the screen processing section 27 sends the image data of this line to the color laser printer 3. Further, the trimming section 26 checks whether the coordinate (y) of the relevant pixel reaches the image size ((y + V) in length) of the image data (S20). When the coordinate (y) does not reach the image size ((y + V) in length) (No at S20), the trimming section 26 returns to S16 and performs the above on the next pixel (y = y + 1). When the coordinate (y) reaches the image size ((y + V) in length) (Yes at S20), the controller 2 ends trimming of this image data (an extraction step).

When the image data is to be output by the CTP, the trimming section 26 performs the above trimming on the area of the page-arranged image data excluding a marginal area (register mark and a punched area of the CTP plate) that need not be output.

Upon receiving the image data, the color laser printer 3 prints out images of the image data (S22).

The operator uses the printout on the color laser printer 3 as the DCP.

As above-explained, in the image output system which is an embodiment of this invention, even when outputting page-arranged image data which overflows a recording medium, the operator can specify a proper size of an output recording medium and use the printout as the DCP because the image output system causes the trimming section 26 to extract a proper area and trim its periphery and the color laser printer 3 to output the extracted area.

[Programs and storage medium to store thereof]

The controller 2 in the image output system performs trimming operations, particularly, processing at steps S10 to S21 in the flow chart (FIG. 4) by programs. These programs are stored in the controller 2 or a recording medium connected to the controller and read and run by the operation part in the controller 2.

The storage medium can be any selected from a set of semiconductor memory (such as ROM, RAM, and flash memory), memory devices (such as integrated circuits), optical disks, magnetic optical disks (CD-ROM, DVD-RAM, DVD-ROM, and MO), magnetic storage media <magnetic disk> (hard disks, floppy ™ disks, and ZIP) and so on.

The image output system, the controller, the image extracting method, programs to execute the method, and the storage medium that stores the programs in this embodiment are included merely to aid in the understanding of the invention and it is to be understood that the invention is not intended to be limited to the specific embodiments.

For example, this embodiment gets the size of a recording medium which outputs image data when the operator specifies the size by the medium specifying section. It is also possible to get the size of a recording medium by automatically selecting the maximum size among those installed in the color laser printer 3 or by automatically selecting a default size among those installed in the color laser printer 3.

As above-explained, in accordance with the image output system, the controller, the image extracting method, the program to execute the method, and the storage medium that stores the program of this invention, even when outputting page-arranged image data which overflows a recording medium, the operator can specify a proper size of an output recording medium and use the printout as the DCP because the image output system causes the trimming section to extract a proper area and trim its periphery and the color laser printer to output the extracted area.

In accordance with the image output system, the controller, the image extracting method, the program to execute the method, and the storage medium that stores the program of this invention, the device cost can be reduced greatly as a color laser printer that is low in the device and running costs and can print out fast can be used actually as a means to create a DCP.

Further, in accordance with the image output system, the controller, the image extracting method, the program to execute the method, and the storage medium that stores the program of this invention, when the image data is to be output by the CTP, only the area of the page-arranged image data excluding a marginal area (register mark and a punched area of the CTP plate) that need not be output is trimmed and output. Therefore, also in such a case, a proper area is output by the color laser printer and the operator can preferably use the printout as the DCP.

Furthermore, in accordance with the image output system, the controller, the image extracting method, the program to execute the method, and the storage medium that stores the program of this invention, the above effect can be obtained without increasing the device cost as the above effect can be actualized by general computer software.

**Claims**

1. An image data output system, comprising:

    an image data control device comprising:

        an image data receiving section to receive an image data which layouts a plurality of image data from an external apparatus,
        a storing section to store the received layout image data,
        an image data analyzing section to analyzes the size of an image area of the stored layout image data,
        an image area memorizing section to memorizes the size of image area which is output by an image data output apparatus according to the size of each recording medium that records an output image data,

        a recording medium specifying section to specifies the size of a recording medium which is output by the image data output apparatus,
        a comparing section to compares the size of the analyzed layout image area with the size of an output image area corresponding to the specified recording medium which is stored in the image area memorizing section,
        a determining section to determines an extraction area that enclose an image area of the stored layout image data according to the comparison result,
        an extracting section to extracts an image data from the stored layout image data into the extraction area according to the determined extraction area, and
        a sending section to send the extracted image data to the image data output apparatus; and

    an image data output apparatus to output an image data according to the sent and extracted image data to the recording medium.

2. The image data output system of claim 1, wherein the image area memorizing section to memorizes both the size and coordinates of an image area which is output by the image data output apparatus, and the image data analyzing section to analyzes both the size and coordinates of an image of the stored layout image data, and the comparing section to compares the size and coordinates of the analyzed layout image area with the size and coordinates of an output image area corresponding to the specified recording medium which is stored in the image area memorizing section, the determining section to determines an extraction area that enclose an image area of the stored layout image data according to the comparison result.

3. The image data output system of claim 2, wherein the determining section to disposes the extraction area in the center of the image of the stored layout image data according to the coordinates of the analyzed image and the coordinates of the image area corresponding to the specified recording medium.

4. The image data output system of claim 1, further comprising:

    a display section to display the size of the image of the stored layout image data when the size is analyzed by the image data analyzing section.

5. The image data output system of claim 1, wherein the image data layouts a plurality of image data includes an effective image area on which the plurality of image data are laid out and a marginal image area containing a register mark or punch holes that are used as printing indexes for cutting, binding, or multi-color printing, and the comparing section uses the effective image area as the size of the analyzed image data.

6. The image data output system of claim 1, wherein the image data layouts a plurality of image data which is output as a color sample for correction and the image data output apparatus is a color laser printer.

7. An image data control device comprising:

an image data receiving section to receive an image data which layouts a plurality of image data from an external apparatus,
a storing section to store the received layout image data,
an image data analyzing section to analyzes the size of an image area of the stored layout image data,
an image area memorizing section to memorizes the size of image area that is output by an image data output apparatus according to the size of each recording medium which records an output image data,
a recording medium specifying section to specifies the size of a recording medium which is output by the image data output apparatus,
a comparing section to compares the size of the analyzed layout image area with the size of an output image area corresponding to the specified recording medium that is stored in the image area memorizing section,
a determining section to determines an extraction area that enclose an image area of the stored layout image data according to the comparison result,
an extracting section to extracts an image data from the stored layout image data into the extraction area according to the determined extraction area, and
a sending section to send the extracted image data to the image data output apparatus.

8. The image data control device of claim 7, wherein the image area memorizing section to memorizes both the size and coordinates of an image area which is output by the image data output apparatus, and the image data analyzing section to analyzes both the size and coordinates of an image of the stored layout image data, and the comparing section to compares the size and coordinates of the analyzed layout image area with the size and coordinates of an output image area corresponding to the specified recording medium that is stored in the image area memorizing section, the determining section to determines an extraction area that enclose an image area of the stored layout image data according to the comparison result.

9. The image data control device of claim 8, wherein the determining section to disposes the extraction area in the center of the image of the stored layout image data according to the coordinates of the analyzed image and the coordinates of the image area corresponding to the specified recording medium.

10. The image data control device of claim 7, further comprising:

a display section to display the size of the image of the stored layout image data when the size is analyzed by the image data analyzing section.

11. The image data control device of claim 7, wherein the image data layouts a plurality of image data includes an effective image area on which the plurality of image data are laid out and a marginal image area containing a register mark or punch holes that are used as printing indexes for cutting, binding, or multi-color printing, and the comparing section uses the effective image area as the size of the analyzed image data.

12. The image data control device of claim 7, wherein the image data layouts a plurality of image data which is output as a color sample for correction and the image data output apparatus is a color laser printer.

13. An image data extracting method comprising steps of:

receiving image data which layouts a plurality of image data from an external apparatus,
storing the received layout image data,
analyzing the size of an image area of the stored layout image data,
memorizing the size of image area that is output by an image data output apparatus according to the size of each recording medium that records a output image data,
specifying the size of a recording medium that is output by the image data output apparatus,
comparing the size of the analyzed layout image area with the size of an output image area corresponding to the specified recording medium that is stored in the image area memorizing section,
determining an extraction area that encloses an image area of the stored layout image data according to the comparison result,

extracting an image data from the stored layout image data into the extraction area according to the determined extraction area, and

sending the extracted image data to the image data output apparatus.

14. The image data extracting method of claim 13, wherein the memorizing step memorizes both the size and coordinates of an image area of that is output by the image data output apparatus, and the image data analyzing section analyzes both the size and coordinates of an image of the stored layout image data, and the comparing step compares the size and coordinates of the analyzed layout image area with the size and coordinates of an output image area corresponding to the specified recording medium that is stored in the image area memorizing section, the determining step determines an extraction area that enclose an image area of the stored layout image data according to the comparison result.

15. The image data extracting method of claim 14, wherein the determining step disposes the extraction area in the center of the image of the stored layout image data according to the coordinates of the analyzed image and the coordinates of the image area corresponding to the specified recording medium.

16. The image data extracting method of claim 13, further comprising step of:

displaying the size of the image of the stored layout image data when the size is analyzed by the image data analyzing step.

17. The image data extracting method of claim 13, wherein the image data layouts a plurality of image data includes an effective image area on which the plurality of image data are laid out and a marginal image area containing a register mark or punch holes that are used as printing indexes for cutting, binding, or multi-color printing, and the comparing step uses the effective image area as the size of the analyzed image data.

18. The image data extracting method of claim 13, wherein the image data layouts a plurality of image data which is output as a color sample for correction and the image data output apparatus is a color laser printer.

19. An image data control program to control a computer to function as an image data control device, comprising:

an image data receiving section to receive an image data which layouts a plurality of image data from an external apparatus,

a storing section to store the received layout image data,

an image data analyzing section to analyzes the size of an image area of the stored layout image data,

an image area memorizing section to memorizes the size of image area which is output by an image data output apparatus according to the size of each recording medium that records a output image data,

a recording medium specifying section to specifies the size of a recording medium that is output by the image data output apparatus,

a comparing section to compares the size of the analyzed layout image area with the size of an output image area corresponding to the specified recording medium which is stored in the image area memorizing section,

a determining section to determines an extraction area that enclose an image area of the stored layout image data according to the comparison result,

an extracting section to extracts an image data from the stored layout image data into the extraction area according to the determined extraction area, and

a sending section to send the extracted image data to the image data output apparatus.

20. A program storage medium comprising data corresponding to the image data control program of claim 19, wherein the program storage medium can be read by the computer.

FIG. 1

# FIG. 2

```
                    ┌─────────┐
                    │  START  │
                    └─────────┘
                         │
    ┌───────────────────→│
    │                    ▼
    │   ┌──────────────────────────────────────┐
    │   │ OUTPUT COLOR COMPREHENSIVE LAYOUT     │ ─── S01
    │   │      (COLOR LASER PRINTER)            │
    │   └──────────────────────────────────────┘
    │                    │
    │   NO               ▼
    │  ◁────────────< COLOR CORRECTION OK? >─── S02
    │                    │
    │                    │ YES
    │                    ▼
    │   ┌──────────────────────────────────────┐
    │   │   LAY OUT FOR PRINTING FORMAT         │ ─── S03
    │   │      ON THE CLIENT TERMINAL           │
    │   └──────────────────────────────────────┘
    │                    │
    │                    ▼
    │   ┌──────────────────────────────────────┐
    │   │   RASTER-IMAGE-PROCESS THE FINAL      │
    │   │          OUTPUT DATA                  │ ─── S04
    │   │     CREATE RI-PROCESSED DATA          │
    │   └──────────────────────────────────────┘
    │                    │
    │   ┌───────────────→│
    │   │                ▼
    │   │   ┌──────────────────────────────────┐
    │   │   │ DCP SPLIT OUTPUT (COLOR LASER     │ ─── S05
    │   │   │          PRINTER)                 │
    │   │   └──────────────────────────────────┘
    │   │                │
    │   │   NO           ▼
    │   │  ◁──────< COLOR CORRECTION OK? >─── S06
    │   │                │
    │   │                │ YES
    │   │                ▼
    │   │   ┌──────────────────────────────────┐
    │   │   │          DCP OUTPUT               │ ─── S07
    │   │   └──────────────────────────────────┘
    │   │                │
    │   │   NO           ▼
    │   │  ◁──────< COLOR CORRECTION OK? >─── S08
    │                    │
    │                    │ YES
    │                    ▼
    │   ┌──────────────────────────────────────┐
    │   │        PRINTING PROCESS               │ ─── S09
    │   └──────────────────────────────────────┘
    │                    │
    │                    ▼
    │                ┌─────────┐
    │                │   END   │
    │                └─────────┘
```

# FIG. 3

4. FROM RIP FOR CTP

IMAGE DATA INPUT MONITORING SECTION — 21

IMAGE DATA STORING SECTION — 20

IMAGE DATA ANALYZING SECTION — 22

TRIMMING SECTION — 26

SCREEN PROCESSING SECTION — 27

3. TO COLOR LASER PRINTER

IMAGE AREA MEMORIZING SECTION — 24

SIZE COMPARING SECTION — 25

MEDIUM SPECIFYING SECTION — 23

EP 1 499 105 A2

# FIG. 4

```
                    ( START )
                        │
                        ▼
    ┌─────────────────────────────────────────┐
    │         ACQUIRE IMAGE DATA               │──── S10
    └─────────────────────────────────────────┘
                        │
                        ▼
    ┌─────────────────────────────────────────┐
    │ ACQUIRE IMAGE DATA SIZE (N mm WIDE BY M  │──── S11
    │ mm LONG) FROM ITS DESCRIPTION            │
    └─────────────────────────────────────────┘
                        │
                        ▼
    ┌─────────────────────────────────────────┐
    │      ACQUIRE OUTPUT MEDIUM SIZE          │──── S12
    └─────────────────────────────────────────┘
                        │
                        ▼
    ┌─────────────────────────────────────────┐
    │ LOAD MEDIUM IMAGE AREA SIZE (H mm        │
    │ WIDE BY V mm LONG) FROM THE              │──── S13
    │ MEMORIZING SECTION                       │
    └─────────────────────────────────────────┘
                        │                        S14
                        ▼
    ╱─────────────────────────────────────────╲   NO
    ╲      N > H OR M > V?                     ╱──────┐
     ╲───────────────────────────────────────╱       │
                        │ YES                         │
                        ▼                             │
    ┌─────────────────────────────────────────┐      │
    │   CALCULATE A TRIMMING ORIGIN (X, Y)     │─ S15 │
    └─────────────────────────────────────────┘      │
       Y+1 ┌──────────────┘                          │
           ▼                                         │
    ┌─────────────────────────────────────────┐      │
    │      READ ONE LINE OF IMAGE DATA         │─ S16 │
    └─────────────────────────────────────────┘      │
       X+1 ┌──────────────┘                          │
           ▼                                         │
    ╱─────────────────────────────────────────╲ S17  │
    │ IMAGE (x, y) SATISFIES ALL OF THE         │     │
    │ CONDITIONS BELOW?                         │ NO  │
    │                                           │─────┤
    │   x > X                                    │     │
    │   x < (X+H)                                │     │
    │   y > Y                                    │     │
    │   y < (Y+V)                                │     │
    ╲─────────────────────────────────────────╱      │
                        │ YES                         │
                        ▼                             │
    ┌─────────────────────────────────────────┐      │
    │ PERFORM COLOR CONTROL AND SCREEN         │─ S18 │
    │ PROCESSING ON IMAGE DATA                 │      │
    └─────────────────────────────────────────┘      │
                        │                         S21 │
        NO              ▼                             │
    ╱───────────────────────────────────╲     ┌───────────────┐
    ╲      x > (X+H) ?                   ╱─S19 │ PERFORM COLOR │
     ╲─────────────────────────────────╱      │ CONTROL AND   │
                        │ YES                  │ SCREEN        │
        NO              ▼                      │ PROCESSING    │
    ╱───────────────────────────────────╲      │ AS USUAL      │
    ╲      y > (Y+V) ?                   ╱─S20 └───────────────┘
     ╲─────────────────────────────────╱              │
                        │ YES  ◄───────────────────────┘
                        ▼
    ┌─────────────────────────────────────────┐
    │             DRAWING                      │──── S22
    └─────────────────────────────────────────┘
                        │
                        ▼
                    ( END )
```

# FIG. 5

COORDINATES
OF ORIGIN

$X = (N-H) / 2$
$Y = (M-V) / 2$

WHOLE IMAGE
DATA

IMAGE OUTPUT
AREA

Hmm  Vmm

ORIGIN OF
COORDINATE

Hmm
Nmm

EP 1 499 105 A2

# FIG. 6

EXAMPLE : 25.4 mm

EXAMPLE : 25.4 mm    EXAMPLE : 25.4 mm

A4 SIZE (294 mm X 210 mm)

EXAMPLE : 25.4 mm

REGISTER MARK

A1 WIDE SIZE
(EXAMPLE :
670 mm X 967 mm)

EP 1 499 105 A2

# FIG. 7 (a)

EXAMPLE : 25.4 mm
EXAMPLE : 25.4 mm

EXAMPLE : 25.4 mm

A4 SIZE
(297 mm X 210 mm)

A3 SIZE
(297 mm X 420 mm)

EXAMPLE : 25.4 mm

EXAMPLE : 25.4 mm

REGISTER MARK

EXAMPLE OF LAYING OUT TWO A4-SIZE PAGES
(THE A3-SIZE SHEET IS NOT ENOUGH
THE IMAGE MUST BE SPLIT WHEN OUTPUT)

# FIG. 7 (b)

A4 SIZE
(210 mm X 297 mm)

EXAMPLE : 25.4 mm

EXAMPLE : 25.4 mm

EXAMPLE : 25.4 mm

EXAMPLE : 25.4 mm

EXAMPLE OF USING A REGISTER MARK
(WHEN THE A4-SIZE SHEET IS NOT ENOUGH
THE IMAGE MUST BE OUTPUT TO A B4 SIZE SHEET)